# EUROPEAN PATENT SPECIFICATION

(11) **EP 2 933 789 B1**
(45) Date of publication and mention of the grant of the patent: **27.11.2019**
(21) Application number: 15162105.9
(22) Date of filing: 31.03.2015
(51) Int. Cl.: G08B 25/14, G06F 3/16, G10L 15/22

(54) **SECURITY ALARM SYSTEM WITH ADAPTIVE SPEECH PROCESSING**
SICHERHEITSALARMSYSTEM MIT ADAPTIVER SPRACHVERARBEITUNG
SYSTÈME D'ALARME DE SÉCURITÉ AVEC TRAITEMENT VOCAL ADAPTATIF

(30) Priority: 15.04.2014 US 201414253165
(43) Date of publication of application: 21.10.2015
(73) Proprietor: Honeywell International Inc., Morris Plains, NJ 07950 (US)
(72) Inventor: Oh, Eric, Morristown, NJ 07962-2245 (US); Addy, Kenneth L., Morristown, NJ 07962-2245 (US); Khot, Bharat Balaso, Morristown, NJ 07962-2245 (US); Zakrewski, David S., Morristown, NJ 07962-2245 (US)
(74) Representative: Houghton, Mark Phillip

(56) References cited:
- EP-A1- 2 083 499
- US-A1- 2003 229 500
- US-A1- 2006 090 079
- Wikipedia: "Speech recognition", , 27 August 2015 (2015-08-27), XP002744048, Retrieved from the Internet: URL:https://en.wikipedia.org/wiki/Speech_r ecognition [retrieved on 2015-09-04]

## Description

The application pertains to regional monitoring systems. More particularly, the application pertains to such systems which provide an easy to use interface to facilitate expanded or more complex user interactions with such systems.

### BACKGROUND

Traditional security alarm systems are not intuitive to use by end users. The typical fixed icon numeric keypads don't provide much assistance to help users interact with the system. Users typically have to memorize a fixed set of keystrokes or press buttons based on a menu flow to enter commands to the system. Most average users end up only using a few of the basic commands and can be intimidated by the system's user interface and not inclined to use other advanced features of the system.

Patent document number EP2083499A1 describes a system having communication devices equipped with a microphone and a loudspeaker. The communication devices are connected with a central sequence control system by a bus system and a power over Ethernet switch that supplies power. The control system is connected with a control center, and processes information of the communication devices. The control center is designed as a computer. The control center and the control system are equipped with an identification device for clear identification of the communication devices.

Patent document number US2006/090079A1 describes a security system which includes biometric authentication such as voice authentication with wireless tag detection to identify both the user and a wireless tag carried by the user. When the user approaches the entrance to a building that is secured by the security system, a tag detector of a user interface receives an identifier from the tag. The user interface transmits the tag identifier to a base station for comparison to pre-stored tag identifiers in a database. If there is a match, the user is prompted to provide a biometric input, such as by speaking a pre-arranged phrase. The biometric input is compared with templates stored in the database to determine if there is a match. If there is a match, the security system is disarmed. The template can be selected based on the tag identifier to improve processing speed.

Patent document number US2003/229500A1 describes an ambient condition detector which incorporates voice recognition circuitry for the receipt of verbal commands in a selected language. The commands can be used to initiate functions, such as tests of various components of the detector, or over-all detector operation. Test results can be reported audible, for example by tones, verbally or optically. Recognizable commands and messages can be pre-recorded and are not user alterable. Other types of functions can be verbially initiated. Alternatively, the user can expand upon the pre-recorded set of commands, or, can record a user specific set of commands.

It would be desirable to provide an easier to use interface for such systems. Ease of use can be expected to result in expanded use of advanced features of such systems.

The present invention in its various aspects is as set out in the appended claims.

### BRIEF DESCRIPTION OF THE DRAWINGS

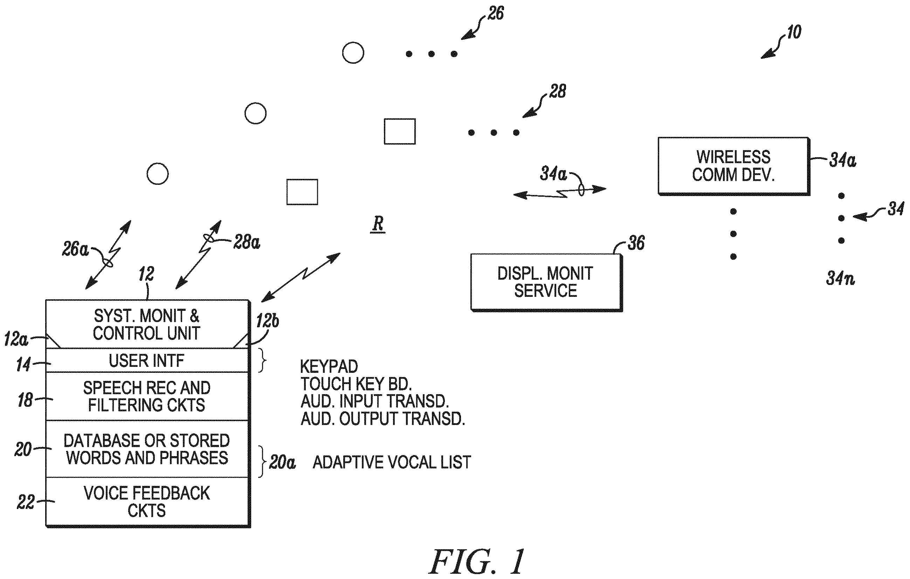

Fig. 1 illustrates a block diagram of a system in accordance herewith.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

In one aspect hereof, speech recognition with smart filtering technology is used in regional monitoring systems to interpret user audible or speech commands to provide smooth and intuitive interactions between the user and system. For example, basic and advanced security functions such as bypass, arming, get status, set operation mode can be smoothly and intuitively invoked by the user.

Embodiments hereof use speech-to-text technology to process audible, or, voice commands in the form of text phrases. Received audible, or voice commands are filtered through preconfigured key words to interpret security commands specific to the security system. Those commands are then executed. Some speech commands will not require any speech reply and others will. For the commands that require audible status replies, the system could use a combination of prerecorded voice audio files and text-to-speech responses. Example commands include "system arm," "system disarm" and code, "leaving home," "cameras," "show weather," and "house status." Many other commands can be provided.

In yet another aspect, embodiments hereof can leverage any speech-to-text solution that processes a received text phrase and parses the entire phrase to extract the key words to compare against a list of preprogrammed and real-time adaptive security commands. The list of preprogrammed words can be stored in the system's command list and device descriptor tables. Examples of these preprogrammed words include "Den", "door", "window", "arm away", "bypass", "check status",...etc.

The list of real-time adaptive words could be created or expanded by installers or users by typing the words or speaking the words to a user interface device such as the keypad or mobile device. An installer could add specific words for a particular installation - so that voice recognition is not necessarily required, but speech recognition would still work. So for example "bedroom" and "window" could be in the pre-loaded database of fixed words, but the installer could add locally (or via download) e.g. "Johnny's", so that a phrase like "Johnny's bedroom window bypass" would be recognizable. The real-time vocabulary list could also adapt to each user's speech preference, grammar and accent.

The adaptive real-time vocabulary list can grow accordingly within each individual system based on the number of devices connected and the frequency of speech command usage. There could be a local database of fixed words and a local database of installer or end-user custom words in the database that could be combined to personalize the installation.

Disclosed embodiments can also provide voice feedback and security status replies back to user via a combination of prerecorded phrases and text-to-speech response. The prerecorded phrases can be pre-stored in respective security systems. Examples include, without limitation, "system disarm", "ready to arm", and "fault front door".

Text-to-speech capabilities provide enhanced voice responses to users, where the system needs to reply, based on an adaptive real-time vocabulary list. As the real-time vocabulary list is built by adaptive words and phrase automated training, the vocabulary could be used to construct appropriate text-to-speech responsive phrases.

In embodiments hereof, interactive automated voice assistance provides prompted help for users to complete an advanced function such as bypassing a zone. For example where a user has the intention to bypass a window, but is not sure how to direct the system in one complete sentence, the user can start by asking the system to "bypass window". In response, the system can ask "which one"? The user can respond by saying "Johnny's bedroom window". The system in response executes the bypass and provides a voice confirmation back to the user.

In yet another aspect, voice assistance can be integrated with a displaced security central monitoring station and service to send and receive messages to and from a customer services department. Such embodiments can provide automated processing of user requests for upgrades, bill payments or the other services. Additionally such displaced stations/services can notify users of service issues, local cell tower issues, and the like all without limitation.

Fig. 1 illustrates a system 10 in accordance herewith. System 10 includes a system monitoring and control unit 12. Unit 12 can be implemented at least in part, by a programmable processor 12a, and, executable control software 12b. Unit 12 includes a user interface 14, speech recognition and filtering circuitry, which might in part, be implemented by processor 12a and instructions 12b.

Unit 12 can also include a data base 20. The data base 20 can include pre-stored words and phrases that form an adaptive vocabulary list 20a. Voice feedback circuitry 22 can also be included in the unit 12.

A plurality of sensors 26 can be installed in a region R and wired or wirelessly coupled to unit 12. A plurality of actuators 28 can be located in the region R and can be wired or wirelessly coupled to unit 12. Those of skill will understand that the respective mediums 26a, 28a can include one or more wireless computer networks such as the Internet, or an intranet.

A plurality of wireless communications devices 34, such as smart phones, tablet computers and the like can be in wireless communications via medium 34a. The medium 34a can include one or more wireless computer networks such as the Internet or an intranet.

A displaced monitoring station or service 36 can be in communication with unit 12 via the medium 34a. The plurality 26 can include security detectors such as motion sensors, glass break detectors as well as ambient condition sensors such as smoke, gas or fire sensors and the like all without limitation. The plurality 28 can include equipment control devices to control fans, lighting or AC for example, or, alarm indicating output devices or door access control devices all without limitation.

In summary, embodiments hereof, such as system 10, use speech-to-text technology to process received audible, or, voice commands, via interface 14 or devices 34, in the form of text phrases, as in circuitry 18, 20. Received audible, or voice commands, via interface 14 or devices 34, are filtered through preconfigured key words to interpret security commands specific to the security system, via circuitry 18 and data base 20. Those commands are then executed, via control circuitry 12 and actuators 28. Some speech commands will not require any speech reply and others will. For the commands that require audible status replies, the system 10 could use a combination of prerecorded voice audio files and text-to-speech responses and voice feedback circuits 22.

In yet another aspect, voice assistance can be integrated with a displaced security central monitoring station and service 36 to send and receive messages to and from a customer services department. Such embodiments can provide automated processing of user requests for upgrades, bill payments or the other services. Additionally such displaced stations/services 36 can notify users of service issues, local cell tower issues, and the like all without limitation.

From the foregoing, it will be observed that numerous variations and modifications may be effected within the scope of the appended claims. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. A monitoring system (12) comprising a manually operable user interface device (14) coupled, at least intermittently, to a speech-to-text component (18) and a text phrase parser component (18) in combination to extract user speech keywords that match a list of preprogrammed and adaptive real-time security commands ,wherein the monitoring system is adapted to execute the commands, and wherein the adaptive real-time security command comprises a combination of at least one word from a pre-loaded database of fixed words (20) and one real time adaptive word from a real time vocabulary list (20a), wherein the monitoring system (12) is adapted to add real time adaptive words to the real time vocabulary list (20a) by users typing or speaking the words to the user interface device (14).

2. A system as in claim 1 wherein the interface device comprises at least one of keypad or mobile device.

3. A system as in claim 2 wherein the real-time adaptive word is adaptable to each user's speech preference, grammar or accent.

4. A system as in claim 3 wherein the real-time vocabulary list (20a) can expand accordingly within each individual system based on the number of connected devices and the frequency of speech command usage.

5. A system as in claim 1 wherein interactive automated voice assistance (22) can provide feedback for the end user to complete a selected command or a selected function.

6. A system as in claim 5 wherein a command or function can be selected from a class which includes at least, system arm, system disarm and code, leaving house, cameras, show weather, show house status, bypass zone, or bypass window.

7. A system as in claim 5 wherein when a user verbally directs the system to bypass a window, the system asks which one, and the user responds by specifying a window, and, wherein the system repeats and acknowledges the request.

8. A method comprising:
providing to a monitoring system (12) a manually operable user interface device (14) and including a speech-to-text component (18) and a text phrase parser component (18) in combination to extract user speech keywords that match a list of preprogrammed and adaptive real-time security commands, wherein the adaptive real-time security command comprises a combination of at least one word from a pre-loaded database of fixed words(20) and one real time adaptive word from a real time vocabulary list (20a), wherein real time adaptive words are added by users to the real time vocabulary list (20a) by typing or speaking the words to the user interface device (14), wherein the monitoring system executes the commands.

9. A method as in claim 8 wherein received phrases are parsed to extract keywords.

10. A method as in claim 9 which includes comparing the keywords against the words stored in the pre-loaded database of fixed words (20) and in the real time vocabulary list (20a).

## Patentansprüche

1. Überwachungssystem (12), umfassend eine manuell betreibbare Benutzerschnittstellenvorrichtung (14), die, zumindest intermittierend, an eine Sprache-zu-Text-Komponente (18) und eine Textausdrucks-Parser-Komponente (18) in Kombination gekoppelt ist, um Benutzersprachschlüsselwörter zu extrahieren, die mit einer Liste von vorprogrammierten und adaptiven Echtzeitsicherheitsbefehlen übereinstimmen, wobei das Überwachungssystem dafür konzipiert ist, die Befehle zu extrahieren, und wobei der adaptive Echtzeitsicherheitsbefehl eine Kombination von zumindest einem Wort aus einer vorgeladenen Datenbank von festen Wörtern (20) und einem adaptiven Echtzeitwort aus einer Echtzeitvokabularliste (20a) umfasst, wobei das Überwachungssystem (12) dafür konzipiert ist, adaptive Echtzeitwörter dadurch zu der Echtzeitvokabularliste (20a) hinzuzufügen, dass Benutzer die Wörter in die Benutzerschnittstellenvorrichtung (14) eingeben oder sprechen.

2. System nach Anspruch 1, wobei die Schnittstellenvorrichtung zumindest eines von einer Tastatur oder einer mobilen Vorrichtung umfasst.

3. System nach Anspruch 2, wobei das adaptive Echtzeitwort an die Sprachpräferenz, die Grammatik oder den Akzent jedes Benutzers anpassbar ist.

4. System nach Anspruch 3, wobei die Echtzeitvokabularliste (20a) innerhalb jedes einzelnen Systems basierend auf der Anzahl verbundener Vorrichtungen und der Häufigkeit der Sprachbefehlsverwendung entsprechend erweitert werden kann.

5. System nach Anspruch 1, wobei eine interaktive automatisierte Sprachunterstützung (22) eine Rückmeldung für den Endbenutzer bereitstellen kann, um einen ausgewählten Befehl oder eine ausgewählte Funktion durchzuführen.

6. System nach Anspruch 5, wobei ein Befehl oder eine Funktion aus einer Klasse ausgewählt werden kann, die zumindest Systemaktivierung, Systemdeaktivierung und Code, Verlassen des Hauses, Kameras, Wetter anzeigen, Hausstatus anzeigen, Zone umgehen oder Fenster umgehen einschließt.

7. System nach Anspruch 5, wobei, wenn ein Benutzer das System mündlich anweist, ein Fenster zu umgehen, das System fragt, welches Fenster gemeint ist, und der Benutzer durch Angeben eines Fensters antwortet, und wobei das System die Anforderung wiederholt und bestätigt.

8. Verfahren, umfassend:
Bereitstellen, an ein Überwachungssystem (12), einer manuell betreibbaren Benutzerschnittstellenvorrichtung (14) und einschließlich einer Sprache-zu-Text-Komponente (18) und einer Textausdrucks-Parser-Komponente (18) in Kombination, um Benutzersprachschlüsselwörter zu extrahieren, die mit einer Liste von vorprogrammierten und adaptiven Echtzeitsicherheitsbefehlen übereinstimmen, wobei der adaptive Echtzeitsicherheitsbefehl eine Kombination von zumindest einem Wort aus einer vorgeladenen Datenbank von festen Wörtern (20) und einem adaptiven Echtzeitwort aus einer Echtzeitvokabularliste (20a) umfasst, wobei adaptive Echtzeitwörter dadurch zu der Echtzeitvokabularliste (20a) hinzugefügt werden, dass Benutzer die Wörter in die Benutzerschnittstellenvorrichtung (14) eingeben oder sprechen, wobei das Überwachungssystem die Befehle ausführt.

9. Verfahren nach Anspruch 8, wobei empfangene Ausdrücke geparst werden, um Schlüsselwörter zu extrahieren.

10. Verfahren nach Anspruch 9, das ein Vergleichen der Schlüsselwörter anhand der Wörter, die in der vorgeladenen Datenbank von festen Wörtern (20) und in der Echtzeitvokabularliste (20a) gespeichert sind, einschließt.

## Revendications

1. Système de surveillance (12) comprenant un dispositif d'interface utilisateur actionnable manuellement (14) couplé, au moins par intermittence, à un composant de conversion de parole en texte (18) et un composant d'analyse syntaxique de phrases textuelles (18) en combinaison pour extraire des mots-clés de parole d'utilisateur qui correspondent à une liste de commandes de sécurité en temps réel préprogrammées et adaptatives, dans lequel le système de surveillance est adapté pour exécuter les commandes, et dans lequel la commande de sécurité en temps réel adaptative comprend une combinaison d'au moins un mot provenant d'une base de données préchargée de mots fixes (20) et d'un mot adaptatif en temps réel provenant d'une liste de vocabulaire en temps réel (20a), dans lequel le système de surveillance (12) est adapté pour ajouter des mots adaptatifs en temps réel à la liste de vocabulaire en temps réel (20a) par des utilisateurs qui tapent ou qui parlent les mots à destination du dispositif d'interface utilisateur (14).

2. Système selon la revendication 1 dans lequel le dispositif d'interface comprend un pavé numérique et/ou un dispositif mobile.

3. Système selon la revendication 2 dans lequel le mot adaptatif en temps réel est adaptable à chaque préférence, grammaire ou accent de la parole de l'utilisateur.

4. Système selon la revendication 3 dans lequel la liste de vocabulaire en temps réel (20a) peut croître conformément au sein de chaque système individuel en fonction du nombre de dispositifs connectés et de la fréquence d'utilisation des commandes de paroles.

5. Système selon la revendication 1 dans lequel une assistance vocale automatisée interactive (22) peut fournir un retour d'informations à l'utilisateur final pour terminer une commande sélectionnée ou une fonction sélectionnée.

6. Système selon la revendication 5 dans lequel une commande ou fonction peut être sélectionnée dans une classe qui comporte au moins : armer système, désarmer système et code, départ de la maison, appareils de prise de vue, montrer météo, montrer état de la maison, contourner zone ou contourner fenêtre.

7. Système selon la revendication 5 dans lequel quand un utilisateur ordonne verbalement au système de contourner une fenêtre, le système demande laquelle, et l'utilisateur répond en spécifiant une fenêtre, et, dans lequel le système répète et acquitte la demande.

8. Procédé comprenant :
la fourniture à un système de surveillance (12) d'un dispositif d'interface utilisateur actionnable manuellement (14) et comportant un composant de conversion de parole en texte (18) et un composant d'analyse syntaxique de phrases textuelles (18) en combinaison pour extraire des mots-clés de parole d'utilisateur qui correspondent à une liste de commandes de sécurité en temps réel préprogrammées et adaptatives, dans lequel la commande de sécurité en temps réel adaptative comprend une combinaison d'au moins un mot provenant d'une base de données préchargée de mots fixes (20) et d'un mot adaptatif en temps réel provenant d'une liste de vocabulaire en temps réel (20a), dans lequel des mots adaptatifs en temps réel sont ajoutés par des utilisateurs à la liste de vocabulaire en temps réel (20a) en tapant ou parlant les mots à destination du dispositif d'interface utilisateur (14), dans lequel le système de surveillance exécute les commandes.

9. Procédé selon la revendication 8 dans lequel des phrases reçues sont analysées syntaxiquement pour extraire des mots-clés.

10. Procédé selon la revendication 9 qui comporte la comparaison des mots-clés aux mots stockés dans la base de données préchargée de mots fixes (20) et dans la liste de vocabulaire en temps réel (20a).
